# EUROPÄISCHE PATENTSCHRIFT

(11) **EP 0 703 386 B1**
(45) Veröffentlichungstag und Bekanntmachung des Hinweises auf die Patenterteilung: **11.11.1998**
(21) Anmeldenummer: 95113359.4
(22) Anmeldetag: 25.08.1995
(51) Int. Cl.: F16H 47/04, F16H 61/00

(54) **Steuerung einer Verdrängermaschine eines hydrostatisch-mechanischen Lastschaltgetriebes**
Control system for a positive displacement machine of a hydromechanic power-shift transmission
Système de commande d'una machine volumétrique d'une transmission hydromécanique à changement de vitesse sous charge

(30) Priorität: 20.09.1994 DE 4433488
(43) Veröffentlichungstag der Anmeldung: 27.03.1996
(73) Patentinhaber: CLAAS Kommanditgesellschaft auf Aktien, 33428 Harsewinkel (DE)
(72) Erfinder: Fredriksen, Nils, Dipl.-Ing., D-33428 Harsewinkel (DE)
(74) Vertreter: Hanewinkel, Lorenz, Dipl.-Phys.

(56) Entgegenhaltungen:
- EP-A- 0 234 136
- EP-A- 0 505 688
- EP-A- 0 599 263
- DE-A- 3 838 767

## Beschreibung

Die Erfindung betrifft ein Verfahren und eine Vorrichtung zur Steuerung eines hydrostatischen Verstellgetriebes eines hydrostatisch-mechanisch stufenlos leistungsverzweigten Lastschaltgetriebes bei dem zu einem Gangwechsel ein Verdrängervolumen jeweils so lange geändert wird, bis ein vorgegebenes Drehzahlverhältnis einer Getriebeeingangswellendrehzahl zu einer Ausgangswellendrehzahl vorliegt, wonach ein Einschalten einer Kupplung eines neuen Ganges erfolgt, und dann das Verdrängervolumen bezüglich eines theoretischen Verdrängervolumens in Richtung auf ein neues Verdrängervolumen geändert wird, bei dem die Kupplung des jeweils noch mitlaufenden, vorher wirksamen Ganges entlastet wird, wonach diese ausgerückt wird.

Aus der DE 38 38 767 C2 ist eine derartige Steuerung einer Verdrängermaschine bekannt, bei der jeweils beim Gangwechsel eine Einstellung des Verdrängervolumens entsprechend dem theoretischen Ölbedarf zuzüglich eines bestimmten Leckageverlustes erfolgt, damit jeweils die auszurückende Kupplung des vorherigen Ganges möglichst drehmomentlos zu schalten ist. Die Bestimmung eines zu berücksichtigenden Leckageverlustes aufgrund früherer Meßwerte und theoretischer Betrachtungen gibt einen ungenauen Kompromiß, da die Verdrängermaschine vor und nach den Schaltpunkten aufeinanderfolgender Getriebestufen jeweils entsprechend der Getriebestufung mit einem unterschiedlichen hydraulischen Ubertragungsanteil wirksam ist, so daß die hydraulischen Druckverhältnisse und demzufolge das Verhältnis der Leckageverluste unterschiedlich groß ist, was stets unberückischtigt geblieben ist, so daß das beabsichtigte drehmomentarme Ausrückenden der Kupplungsteile entweder in keinem Fall oder nur bei dem Hoch- oder dem Herunterschalten erreicht wird, was zu Schäden an der Kupplung und dem Getriebe und ruckartigem Betrieb führt.

Es ist Aufgabe der Erfindung, eine Steuerung der Verdrängermaschine zu offenbaren, bei der bei jedem Schaltvorgang eine drehmomentlose Einstellung der auszurückenden Kupplungsteile zuverlässig und für eine zum vollständigen Auskuppeln ausreichende Zeit erreicht wird.

Die Lösung der Aufgabe besteht darin, daß jeweils während dieser Änderung des Verdrängervolumens die Kupplung des jeweils noch mitlaufenden, vorher wirksamen Ganges in Ausrückrichtung angesteuert wird und dabei ein Kupplungsstellungssignal laufend darauf überwacht wird, ob ein Ausrücken beginnt, und wenn dies der Fall ist, das erreichte Verdrängervolumen konstant gehalten wird, bis ein vollständiges Ausrücken der betreffenden Kupplung durch das Kupplungsstellungssignal gemeldet wird.

Vorteilhafte Ausgestaltung sind in den Unteransprüchen angegeben.

Bei den bekannten Verdrängermaschinen wird das Verdrängervolumen durch eine Schwenkverstellung eines Widerlagers vorgenommen, die mittels einer proportional wirkenden hydraulischen Verstelleinrichtung elektrisch gesteuert erfolgt. In einem stufenlosen, hydrostatischleistungsverzweigten Getriebe wird die Verdrängermaschine jeweils vor dem Heraufschalten einer Getriebestufe additiv leistungsübertragend und nach dem Umschalten in den höheren Gang subtraktiv genutzt. In beiden Fällen sind theoretisch synchrone Drehzahlen an den ein- und auszurückenden Kupplungen vorgegeben, damit ein ruckfreies Einschalten der Kupplung des neuen Ganges ebenso wie ein ruckfreies Ausrücken der Kupplung des vorherigen Ganges danach erfolgt. Im praktischen Betrieb ist es nun erforderlich, daß vor dem Einkuppeln des neuen Ganges zur Herstellung des Synchronlaufes an der Kupplung das hydrostatische Getriebe so gesteuert ist, daß auch dessen Leckageverluste gedeckt sind. Da nach dem Einschalten des neuen Ganges wegen der inversen Betriebsweise des Hydraulikgetriebes wieder Leckageverluste bezüglich der konstant arbeitenden Verdrängereinheit auftreten, ist es zur Einstellung einer Drehmomentfreiheit an der auszurückenden Kupplung erforderlich, eine korrigierende, diese Verhältnisse berücksichtigende, Umsteuerung des Verdrängervolumens vorzunehmen, wobei die unterschiedlichen Leckageverluste zu berücksichtigen sind.

Gemäß der Erfindung ergibt sich jeweils die richtige korrigierende Einstellung unabhängig von den jeweiligen Druckverhältnissen und damit den entsprechenden Leckageverlusten, die jeweils abhängig von dem jeweils genutzten Verzweigungsverhältnis im oberen Drehzahlbereich des unteren Ganges und in unteren Drehzahlbereich des oberen Ganges um das Schaltverhältnis verschieden sind. Aus diesem Grund sind die Leckageverluste vor einem Heraufschalten im Synchronzustand der einzuschaltenden Kupplung kleiner als nach dem Heraufschalten bei einer Einstellung zu einer Drehmomentenfreiheit der auszurückenden Kupplung. Bei einem Herunterschalten sind die Verlustverhältnisse umgekehrt. Gemäß der Erfindung werden diese Unterschiede der Leckageverluste vor und nach dem Schalten in der Einstellung des Verdrängervolumens berücksichtigt, so daß erst dann ein Auskuppeln vorgenommen wird, wenn kein Drehmoment über die Kupplungsteile übertragen wird, was durch die beginnende Bewegung der Kupplungsteile bei der jeweils richtigen Verdrängervolumeneinstellung signalisiert wird.

Es ist vorteilhaft vorgesehen, zur Einstellung des Verdrängervolumens einen Regelkreis zu verwenden, dem ein Stellungssignal der Stellvorrichtung des Verdrängervolumens als Verdränger-Ist-Signal zugeführt wird. Weiterhin ist es vorgesehen, daß in bekannter Weise Drehzahlsignale von den An- und Abtriebswellen der hydrostatischen Getriebeeinheit abgenommen werden. Dadurch läßt sich durch Beachtung der jeweils für die einzelnen Gänge bekannten Drehzahlverhältnisse erreichen, daß das Einkuppeln des nächsten gewünschten Ganges bei einer Synchronität an der Kupplung erfolgt. In Richtung auf das theorethische Verdränger-Stellungssingal und darüberhinaus wird nun ein der Verdränger-Regelung vorzugebendes Soll-Stellungssignal kontinuierlich gebildet, so daß die für den neuen Getriebezweig unterschiedlichen Leckölverluste zunehmend berücksichtigt sind. Wenn danach der so eingeleitete Regelvorgang der kontinuierlichen Verdrängerverstellung so weit fortgeschritten ist, daß die noch mitlaufende Kupplung des anzukoppelnden Getriebezweiges entlastet ist, erfolgt eine Konstantregelung, bis diese Kupplung des früheren Ganges vollständig ausgerückt ist, wonach der Gang unter Umständen weiter durchlaufen wird, indem das Verdrängervolumen entsprechend einer Bedienungsvorgabe fortlaufend geregelt vorgegeben wird.

Diese vorstehend beschriebene Regelung und Steuerung der Hydraulikk und der Kupplungen erbringt auch eine Anpassung der Hydraulikeinestellung beim Auskuppeln an das sich mit dem laufenden Betrieb verändernde Leckverhalten der Vorrichtung, das von der Temperatur des Hydrauliköles und der der Stelleinheit abhängig ist und sich außerdem mit der Last ändert.

Eine vorteilhafte Ausgestaltung eines Getriebes mit der Stellvorrichtung, die eine erfindungsgemäße Einstellung und Kupplungsbetätigung vornimmt, zeigen Fig. 1 bis 5.
- Fig. 1: zeigt ein Mehrganggetriebeschema;
- Fig. 2: zeigt die hydrostatischen Leistungsanteile des Getriebes;
- Fig. 3: zeigt die hydrostatischen Druckverhältnisse des Getriebes;
- Fig. 4: zeigt ein Hochschalt-Einstelldiagramm;
- Fig. 5: zeigt ein Herunterschalt-Einstelldiagramm.

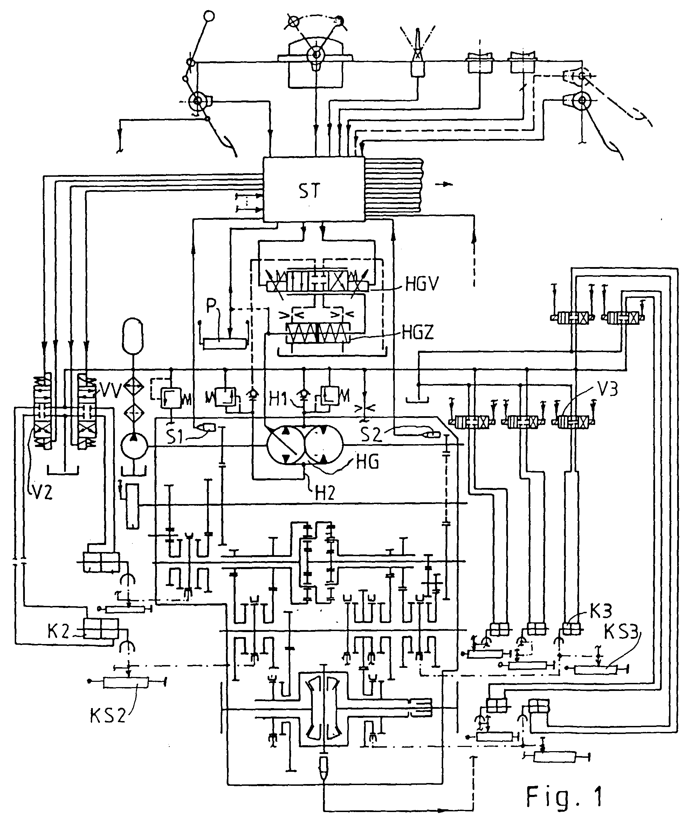

Fig. 1 zeigt ein hydrostatisch-mechanisch leistungsverzweigtes Lastschaltgetriebe, dessen hydrostatischer Zweig aus dem hydrostatischen Stellgetriebe (HG) besteht. Dieses wird durch eine elektronische Steuervorrichtung (ST) gesteuert, indem diese über ein elektrisch-hydraulisches Steuerventilpaar (HGV) einen stellungsproportional wirkenden Hydraulik-Steuerzylinder (HGZ) betätigt, so daß dieser den Stellwinkel und damit das Verdrängervolumen des Hydraulikstellgetriebes (HG) bestimmt.

Beispielsweise wird zum Heraufschalten vom 2. in den 3. Gang bei einem vorgegebenen Drehzahlverhältnis an der Ein- und der Ausgangswelle des Hydrostatikwandlers (HG), das Vorhandensein dieses Drehzahlverhältnisses aus den Signalen der Drehzahlsensoren (S1, S2) in der elektronischen Steuervorrichtung (ST) ermittelt wird, von der Steuervorrichtung (ST) das elektrohydraulische Dritte-Gang-Ventil (V3) betätigt, das die 3.-Gang-Kupplung (K3) hydraulisch einrücken läßt, wobei das ermittelte Drehzahlverhältnis sicherstellt, daß die Getriebeteile der Kupplung (K3) des dritten Ganges vor dem Kuppeln synchron umlaufen. Dann wird von der Steuervorrichtung (ST) über das elektrohydraulische Steuerventil (HGV) das Proportionalsteuerventil (HGZ) so beaufschlagt, daß dieses kontinuierlich den für das drehmomentfreie Auskuppeln andere Leckageverlusten gemäß korrigierend verstellt wird, bis an den mitlaufenden Kuppplungsklauen der Kupplung (K2) des zweiten Ganggetriebes kein Drehmoment mehr übertragen wird. Dann wird von der Steuervorrichtung (ST) das Zweite-Gang-Ventil (V2) abgeschaltet und dadurch die Zweite-Gang-Kupplung (K2) hydraulisch rucklos ausgerückt, indem das zugehörige steuerbare Ventil (V2) abgeschaltet wird. Die Drehmomentfreihet an der Kupplung (K2) wird dadurch ermittelt, daß bei in Trennrichtung beaufschlagter Kupplung (K2) ständig das Signal des Kupplungsstellungssensors (KS2) auf eine auftretende Stellungsänderung von der Steuervorrichtung (ST) überwacht wird. Sobald eine Änderung des Signals erkannt wird, wird die weitere Verstellung der Verdrängermaschiene gestoppt und das vollständige Ausrücken der Kupplung (K2) abgewartet. Dieses geschieht durch eine laufende Überwachung des Kupplunsstellungs-Sensorsignales und dessen Vergleich mit einem früher gemessenen und gespeicherten Stellungssignal in der ausgekuppelten Stellung. Dabei wird zweckmäßig ein Toleranzwert der Stellungungenauigkeit bei wiederholtem Betätigen der Kupplung berücksichtigt.

Zum Herunterschalten vom dritten Gang in den zweiten Gang werden die Vorgänge der Synchronisation an der zu schließenden Kupplung (K2), des Einkuppelns des neuen Ganges, der Kupplungsentlastung und des Ausrückens der Kupplung (K3) des vorherigen Ganges in umgekehrter Reihefolge ausgeführt, wobei jedoch zu beachten ist, daß beim Herunterschalten eine Verstellung des Verdrängervolumens über das alte Verdrängervolumen, das beim Einkuppeln herrschte, hinaus erfolgen muß, wonach das Entkuppeln und dann erst das anschließende Reduzieren des Verdrängervolumens erfolgt. Entsprechende Schaltvorgänge finden bei anderen Gangwechseln statt.

Der Unterschied der Leckagen in den beiden Verdrängereinheiten (HG) und den an den Hydraulikleitungen (H1, H2) angeschlossenen Verbrauchern resultiert aus den Druckunterschieden vor und nach den Schaltvorgängen.

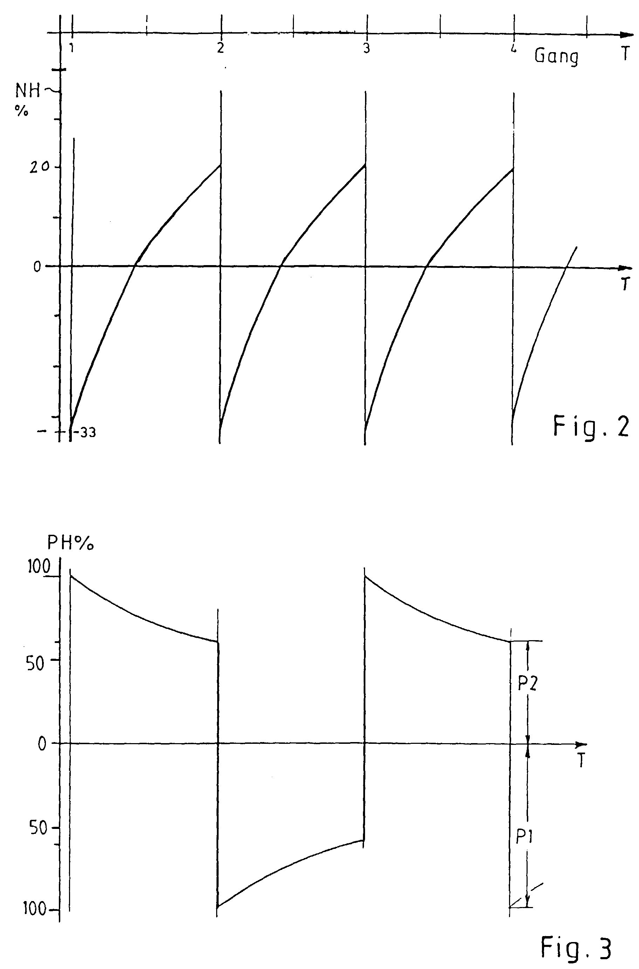

Diese Druckunterschiede in den Hydraulikleitungen folgen aus dem jeweiligen hydrostatischen Leistungsanteil der übertragenen Leistung im hyraulischen Getriebezweig. Dieser Leistungsanteil (NH) ist in Fig. 2 über dem Transmissionsverhältnis (T) für die unteren Gänge des Getriebes aufgezeichnet. Da das hier vorgesehene Einstellverhältnis 1 : 1,66 beträgt, ergibt sich ein hydrostatisch übertragener Anteil von minus 33% bzw. von 20%, jenachdem ob die Getriebestufe im unteren oder im oberen Drehzahlbereich betrieben ist.

Fig. 3 zeigt die Druckverhältnisse im hydrostatischen Zweig. Betragsmäßig verhalten sich die beiden Drücke (P1, P2) beiderseits des Schaltpunktes zueinander wie das Stellverhältnis.

Die jeweils zu den Einschalt- bzw. Ausschaltzeitpunkten der Kupplungen (K2, K3) - s. Fig.1 - vorgegebenen Einstellungen des Proportionalstellzylinders (HGZ), die die unterschiedlichen Leckagen berücksichtigen, werden durch eine geeignete Beaufschlagung jeweils eines der beiden konträr wirkenden Stellventile der elektro-hydraulischen Ventileinheit (HGV) von der Steuervorrichtung (ST) bewirkt.

Zur genauen Einstellbarkeit der Proportionalventileinheit (HGV) ist dieses mit einem vorgebbaren Strom von der Steuervorrichtung (ST) gespeist. Dieser Strom wird vorzugsweise durch einen Stromsensor an die Steuervorrichtung (ST) als Verdrängerstellungs-Ist-Signal rückgemeldet.

In einer anderen Ausgestaltung der Vorrichtung ist zur genauen Einstellbarkeit das Maß der Verstellung des Proportionalstellzylinder (HGZ) mittels eines Positionsmelders, z.B. eines Potentiometers (P) schleiferseitig, an die Steuervorrichtung (ST) als Verdrängerstellungs-Ist-Signal rückgekoppelt.

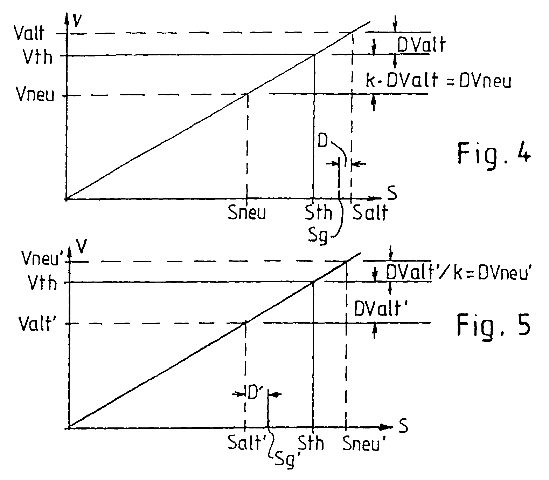

In Fig. 4 ist schematisch, d.h. im Schaltbereich vergrößert, die Abhängigkeit des Verdrängervolumens und der zugehörigen Stellungen der Steuermittel des Verdrängervolumens beim Hochschalten dargestellt. Das alte Verdrängervolumen (Valt), das beim Einkuppeln herrscht, ist um das Leckvolumen (DValt) größer als das theoretische Verdrängervolumen (Vth). Das neue Verdrängervolumen (Vneu), bei dem das alte Ganggetriebe lastfrei ist, ist um eine, um den Leckvolumenfaktor (k) größere Leckvolumendifferenz (DValt x k) kleiner als das theoretische Verdrängervolumen (Vth). Demgemäß sind die alte und die neue Einstellung (Salt, Sneu) um einen kleineren bzw. einen größeren Betrag höher bzw. niedriger als die theoretische Stellung (Sth). Hierbei ist der Leckvolumenfaktor prinzipiell größer 1, da im alten und im neuen Zustand andere Druckverhältnisse herrschen, die zu den Unterschieden führen.

In Fig. 5 ist schematisch, vergrößert im Kupplungsstellbereich, die Abhängigkeit des Verdrängervolumens und der zugehörigen Stellungen der Verdrängersteuermittel beim Herunterschalten gezeigt. Es ist ersichtlich, daß das alte Verdrängervolumen (Valt'), das beim Einkuppeln des unteren Gangetriebes angesteuert ist, um ein größeres Verlustvolumen (DValt') unter dem theoretsichen Verdrängervolumen (Vth) liegt als das neue Verdrängervolumen (Vneu') nach dem Herunterschalten, das zur Lastfreiheit des alten Ganggetriebes erforderlich ist, über dem theoretischen Verdrängervolumen (Vth) liegt. Dieser Leckverlust (DVneu') ergibt sich als Quotient aus dem alten Leckverlust (DValt') und dem Leckvolumenfaktor (k). Durch den angenommenen linearen Zusammenhang der Stellungen der Steuermittel zu den Volumina ergibt sich die dargestellte Abhängigkeit der alten und der neuen Stellung (Salt', Sneu') beim Herunterschalten in ihrer Lage zur theoretsichen Stellung (Sth).

Wie man aus der Darstellung erkennt, ist die Stellung (Sneu'), bei der das ruckfreie Auskuppeln erfolgt, weiter ausgesteuert als die Kupplungsschließstellung (Salt'). Erst nach der weiteren Aussteuerung erfolgt also die Rückführung der Steuerung auf die entgegengesetzte Stellung hin, sofern der Antrieb weiter übersetzt werden soll.

Wie Fig. 1 zeigt, sind sämtliche Kupplungen (K2, K3) mit Kupplungstellungssensoren (KS2, KS3) ausgerüstet, sodaß alle Schaltvorgänge entsprechend abgewickelt werden können. Die Kupplungstellungssensoren (KS2, KS3) sind beispielsweise handelsübliche Drehpotentiometer, die an den Betätigungswellen der Schwenkklauen angeordnet sind. Der Arbeitsbereich dieser Potentiometer ist zweckmäßig etwas größer als der Schwenkwinkel der Schwenkklauen zwischen dem ein- und ausgekuppelten Zustand der angeschlossenen Kupplungen. Die beiden Sensorsignalwerte der Spannungsgespeisten Potentiometer die in den Kupplungseinstellungen jeweils auftreten, werden von der Steuervorrichtung gespeichert und als Vergleichswerte genutzt, wobei eine Toleranzgröße zweckmäßig berücksichtigt wird. Die Speicherung der Endwerte läßt sich nach jedem Kuppelvorgang wiederholen und so der Wert etwaigen Schwankungen anpassen. Die Stellungssensoren der Kupplungen dienen außerdem der Überwachung der richtigen Funktion der Kupplung und deren Stellmittel, was auch bisher üblich war. Die Feststellung der richtigen Auskuppelverhältnisse mittels der Kupplungsstellung-Sensorsignale ist eine neue zusätzliche Nutzung derselben.

## Patentansprüche

1. Verfahren zur Steuerung eines hydrostatischen Verstellgetriebes (HG) eines hydrostatisch-mechanisch stufenlos leistungsverzweigten Lastschaltgetriebes bei dem zu einem Gangwechsel ein Verdrängervolumen jeweils so lange geändert wird, bis ein vorgegebenes Drehzahlverhältnis einer Getriebeeingangswellendrehzahl zu einer Ausgangswellendrehzahl vorliegt, wonach ein Einschalten einer Kupplung (K2, K3) eines neuen Ganges erfolgt, und dann das Verdrängervolumen bezüglich eines theoretischen Verdrängervolumens (Vth) in Richtung auf ein neues Verdrängervolumen (Vneu, V'neu) geändert wird, bei dem die Kupplung (K3, K2) des jeweils noch mitlaufenden, vorher wirksamen Ganges entlastet wird, wonach diese ausgerückt wird,
dadurch gekennzeichnet, daß während dieser Änderung des Verdrängervolumens die Kupplung (K3, K2) des jeweils noch mitlaufenden, vorher wirksamen Ganges in Ausrückrichtung angesteuert wird und dabei ein Kupplungsstellungssignal laufend darauf überwacht wird, ob ein Ausrücken beginnt, und wenn dies der Fall ist, das erreichte Verdrängervolumen konstant gehalten wird, bis ein vollständiges Ausrücken der betreffenden Kupplung (K3, K2) durch das Kupplungsstellungssignal gemeldet wird.

2. Verfahren nach Anspruch 1, dadurch gekennzeichnet, daß während der Änderung des Verdrängervolumens die Kupplung (K3) intermittierend jeweils für einen kurzen, zu einer Bewegung in die Ausrückerichtung ausreichenden, Zeitraum angesteuert wird und davor jeweils das Kupplungsstellungssignal gespeichert und danach das jeweilige Kupplungsstellungssignal mit dem gespeicherten Kupplungsstellungssignal verglichen wird und, wenn dieses um einen vorgegebenen ersten Vergleichswert davon abweicht, die Kupplung (K3) solange ausrückend angesteuert wird, bis das jeweilige Kupplungsstellungssignal einen zweiten vorgegebenen Vergleichswert erreicht hat, der das vollständige Ausrücken der Kupplung (K3) signalisiert.

3. Vorrichtung zur Durchführung des Verfahrens nach einem der vorstehenden Ansprüchen, dadurch gekennzeichnet, daß die Kupplungen (K2, K3) mit Kupplungsstellungsensoren (KS2, KS3) verbunden sind, deren Kupplungsstellungsignale einer elektronischen Steuervorrichtung (ST) zugeführt sind, die diese verfahrensgemäß auswertet.

4. Vorrichtung nach Anspruch 3, dadurch gekennzeichnet, daß die Kupplungsstellungssensoren (KS2, KS3) Drehpotentiometer sind, die jeweils mit einer Kupplungsstellerwelle der zugehörigen Kupplung (K2, K3) verbunden sind und deren Winkelstellbereich jeweils größer als ein Schwenkbereich der Kupplungsstellerwelle zwischen den ein- und ausgerückten Kupplungsstellungen ist.

5. Vorrichtung nach Anspruch 4, dadurch gekennzeichnet, daß in der Steuervorrichtung (ST) jeweils die Kupplungsstellungs-Sensorsignale, die in den ein- und ausgerückten Kupplungsstellungen vorliegen, als die Vergleichswerte eingespeichert sind, die unter Berücksichtigung von Toleranzwerten den verfahrensgemäßen Vergleichen dienen.

6. Vorrichtung nach Anspruch 3, dadurch gekennzeichnet, daß das Verstellgetriebe (HG) mit einem Proportionalventil (HGZ) gesteuert verbunden ist, das von einem elektrohydraulischen Steuerventilsatz (HGV) beaufschlagbar ist, das elektrisch von der elektronischen Steuervorrichtung (ST) beaufschlagt ist, die mittels eines Steuerprogrammes verfahrensgemäß den Steuerventilsatz (HGV) und die Kupplungen (K2, K3) mittels elektro-hydraulischer Ventile (V2, V3) ansteuert.

7. Vorrichtung nach Anspruch 6, dadurch gekennzeichnet, daß das Proportionalventil (HGZ) von der Steuervorrichtung (ST) mit einem jeweils vorgegebenen Strom beaufschlagt ist, proportional zu dem dieses jeweils eingestellt ist oder an dem Proportionalventil (HGZ) oder an dem Verstellgetriebe (HG) ein Stellungssensor (P) angeordnet ist, dessen Stellungssignal der Steuervorrichtung (ST) zugeführt ist, das als ein Rückkoppelsignal in einer Regelschleife jeweils zur Einstellung des verfahrensgemäß bestimmten Verdrängervolumens dient.

8. Vorrichtung nach Anspruch 6, dadurch gekennzeichnet, daß an der Ein- und Ausgangswelle des Verstellgetriebes (HG) Tachometersensoren (S1, S2) angeordnet sind, deren Signale von der Steuervorrichtung (ST) jeweils zur Ermittlung eines Synchronzustandes an einer zu schließenden Kupplung (K2, K3) überwacht werden.

## Claims

1. Procedure for controlling a hydrostatic adjustable mechanism (HG) of a load switching gear with a hydrostatically-mechanically infinitely variable switched output, in which, in order to change gear, a displacement volume is altered in each case until a pre-set speed ratio of a gear input shaft speed to an output shaft speed is achieved, after which a coupling (K2, K3) will engage a new gear, and the displacement volume is then changed in relation to a theoretical displacement volume (Vth) towards a new displacement volume (Vnew, V'new), at which the coupling (K3, K2) of the previously effective gear, which is still running, is relieved of load, after which this [coupling] is disengaged,
**characterized in that**
during this change of displacement volume, the coupling (K3, K2) of the previously effective, and still running, gear is driven towards disengagement, while a coupling position signal is continuously monitored to see whether disengagement is starting, and if it is, then the displacement volume which has been achieved is kept constant until complete disengagement of the coupling concerned (K3, K2) is indicated by the coupling position signal.

2. Procedure in accordance with claim 1, characterized in that during the alteration of the displacement volume, the coupling (K3) is intermittently driven in each case for a brief period, sufficient for a movement in the disengagement direction, and before that in each case the coupling position signal is stored, after which the respective coupling position signal is compared with the stored coupling position signal, and if this differs from it by a pre-set initial comparison value, the coupling (K3) is driven to disengage, until the respective coupling position signal has reached a second pre-set comparison value which indicates complete disengagement of the coupling (K3).

3. Device for carrying out the procedure in accordance with one of the preceding claims, characterized in that the couplings (K2, K3) are connected with coupling position sensors (KS2, KS3), whose coupling position signals are fed to an electronic control device (ST) which evaluates these in accordance with the procedure.

4. Device in accordance with claim 3, characterized in that the coupling position sensors (KS2, KS3) are rotary potentiometers which are in each case connected with a coupling positioning shaft of the relevant coupling (K2, K3), and whose angle adjustment range is in each case greater than a pivot range of the coupling positioning shaft between the engaged and disengaged coupling positions.

5. Device in accordance with claim 4, characterized in that in the control device (ST), in each case the coupling position sensor signals, which are present in the engaged and disengaged coupling positions, are stored as the comparison values which serve the purpose of comparison in accordance with the procedure, taking into account tolerance values.

6. Device in accordance with claim 3, characterized in that the adjustable mechanism (HG) is connected, in a controlled manner, with a proportional valve (HGZ) which can be pressurized by an electro-hydraulic control valve set (HGV), which can be electrically pressurized by the electronic control device (ST) which - in accordance with the process - drives, by means of a control program, the control valve set (HGV), and the couplings (K2, K3) by means of electro-hydraulic valves (V2, V3).

7. Device in accordance with claim 6, characterized in that the proportional valve (HGV) can be pressurized by the control device (ST) with a current which is pre-set in each case, in proportion to which this is, in each case, set, or [that] arranged on the proportional valve (HGZ) or on the adjustable mechanism gear (HG) is a position sensor (P) whose position signal is fed to the control device (ST), and which serves as a feedback signal in a control loop in each case for setting the displacement volume determined in accordance with the procedure.

8. Device in accordance with claim 6, characterized in that arranged on the input and output shaft of the adjustable mechanism (HG) are tachometer sensors (S1, S2) whose signals are monitored by the control device (ST) in each case to determine a synchronous state on a coupling (K2, K3) which is to be closed.

## Revendications

1. Procédé de commande d'une boîte de vitesse réglable, hydrostatique (HG) pour une transmission hydromécanique à changement de vitesses sous charge et dérivation de puissance sans étages, dans le cadre duquel, lors d'un changement de vitesse, un volume refoulé est modifié jusqu'à l'obtention d'un rapport prédéterminé entre la vitesse de rotation de l'arbre primaire de la boîte de vitesses et l'arbre de sortie, ce après quoi une nouvelle vitesse est passée par mise en prise d'un embrayage (K2, K3), le volume refoulé étant ensuite modifié quant à un volume théorique (Vth) en direction d'un nouveau volume (Vne, V'neu), l'embrayage (K3, K2) de la vitesse précédemment passée et encore couplée étant alors relâché, puis mis hors de prise,
caractérisé en ce que
pendant cette modification du volume refoulé, l'embrayage (K3, K2) de la vitesse respective précemment activée et encore couplée est excité dans le sens de mise hors de prise, un signal de position de l'embrayage étant constamment contrôlé afin de vérifier si la mise hors de prise commence et, dans ce cas, le volume refoulé étant maintenu constant jusqu'à ce que le signal de position de l'embrayage annonce la mise hors de prise complète de l'embrayage (K3, K2) concerné.

2. Procédé selon la revendication 1,
caractérisé en ce que
pendant la modification du volume, l'embrayage (K3) est excité par intermittence, pendant un bref laps de temps suffisant pour l'exécution d'un mouvement dans le sens de mise hors de prise, le signal de position de l'embrayage étant comparé ensuite avec le signal de positionnement mémorisé auparavant et, en cas de divergence correspondant à une première valeur de comparaison, l'embrayage (K3) est excité en débrayage jusqu'à ce que le signal de position d'embrayage en question atteigne une deuxième valeur de comparaison prédéterminé qui signale la mise hors de prise complète de l'embrayage (K3).

3. Dispositif pour l'exécution du procédé selon l'une des revendications précédentes,
caractérisé en ce que
les embrayages (K2, K3) sont reliés à des capteurs de position d'embrayage (KS2, KS3) dont les signaux de position d'embrayage sont conduits à un dispositif de commande électronique (ST) qui les évaluent conformément au procédé.

4. Dispositif selon la revendication 3,
caractérisé en ce que
les capteurs de position d'embrayage (KS2, KS3) sont des potentiomètres rotatifs qui sont respectivement raccordés à l'axe du plateau d'embrayage de l'embrayage afférent (K2, K3) et dont le domaine d'obliquité est respectivement supérieur à un domaine de pivotement de l'arbre de réglage entre les positions de mise en prise et de mise hors de prise de l'embrayage concerné.

5. Dispositif selon la revendication 4,
caractérisé en ce que
les signaux des capteurs de position d'embrayage en mise en prise et mise hors de prise sont mémorisés dans le dispositif de commande électronique (ST) en tant que signaux de comparaison servant à l'exécution de comparaisons selon le procédé, compte tenu de valeurs de tolérance.

6. Dispositif selon la revendication 3,
caractérisé en ce que
la boîte de vitesses (HG) est raccordée, commandée, à une valve proportionnelle (HGZ) qui est subordonnée à un jeu de valves de contrôle électrohydrauliques (HGV), subordonné lui-même, électriquement, au dispositif de commande électronique (ST) qui excite le jeu de valves de contrôle (HGV) et les embrayages (K2, K3) par l'intermédiaire des valves électrohydrauliques (V2, V3) conformément à un programme de commande.

7. Dispositif selon la revendication 6,
caractérisé en ce que
la valve proportionnelle (HGZ) est soumise, par le dispositif de commande électronique (ST), à un courant respectivement prédéterminé, proportionnel à celui auquel elle est réglée ou qu'un capteur de position (P) est raccordé à la valve proportionnelle (HGZ) ou à la boîte de vitesses réglable (HG), capteur de position (P) dont le signal est conduit au dispositif de commande électronique (ST) et sert, en tant que signal rétroactif dans une boucle de régulation, au réglage du volume refoulé, défini selon le procédé.

8. Dispositif selon la revendication 6,
caractérisé en ce que
l'arbre primaire et l'arbre de sortie de la boîte de vitesses (HG) sont équipés de capteurs tachymétriques (S1, S2) dont les signaux sont contrôlés par le dispositif de commande électronique (ST) aux fins de détection respective d'un état synchrone sur l'un des embrayages (K2, K3).
